# EUROPÄISCHE PATENTSCHRIFT

(11) **EP 1 721 248 B1**
(45) Veröffentlichungstag und Bekanntmachung des Hinweises auf die Patenterteilung: **20.06.2007**
(21) Anmeldenummer: 05716610.0
(22) Anmeldetag: 01.02.2005
(51) Int. Cl.: G06F 9/445

(54) **VERFAHREN UND DATENVERARBEITUNGSGERÄT ZUR AKTUALISIERUNG VON RECHNERPROGRAMMEN PER DATENÜBERTRAGUNG**
METHOD AND DATA PROCESSING DEVICE FOR UPDATING COMPUTER PROGRAMS BY DATA TRANSMISSION
PROCEDE ET APPAREIL DE TRAITEMENT DE DONNEES POUR LA MISE A JOUR DE PROGRAMMES INFORMATIQUES PAR TRANSMISSION DE DONNEES

(30) Priorität: 02.03.2004 DE 102004010179
(43) Veröffentlichungstag der Anmeldung: 15.11.2006
(73) Patentinhaber: SIEMENS AKTIENGESELLSCHAFT, 80333 München (DE)
(72) Erfinder: GEMPERLEIN, Stefan, 82194 Gröbenzell (DE); GRULER, Martin, 78554 Aldingen (DE)
(86) Internationale Anmeldenummer: PCT/EP2005/050420
(87) Internationale Veröffentlichungsnummer: WO 2005/085993

(56) Entgegenhaltungen:
- WO-A-00/11549
- WO-A-20/04114130
- BAKER B S ET AL: "Compressing differences of executable code" WORKSHOP ON COMPILER SUPPORT FOR SYSTEM SOFTWARE AND ACM SIGPLAN, 22. April 1999 (1999-04-22), Seiten 1-10, XP002315222

## Beschreibung

Die Erfindung betrifft ein Verfahren zur Erzeugung von Differenzdaten zwischen einer zu aktualisierenden, alten Programmversion eines Rechnerprogramms und einer neuen Programmversion des Rechnerprogramms sowie ein Verfahren zur Aktualisierung einer alten Programmversion eines Rechnerprogramms mit Hilfe von Differenzdaten. Des Weiteren betrifft die Erfindung ein Datenverarbeitungsgerät zur Erzeugung und Versendung von Differenzdaten sowie ein Datenverarbeitungsgerät zum Empfang und zur Verarbeitung der Differenzdaten.

In Datenverarbeitungsanlagen werden im allgemeinen die alten Versionen von Rechnerprogrammen, egal ob ganze Betriebssysteme oder nur Teile einer Anwendungssoftware, vollständig durch neue Versionen ersetzt, das heißt, eine neue Programmdatei überschreibt eine alte Programmdatei mit demselben Namen. Sofern Rechnerprogramme von mobilen Datenverarbeitungsgeräten, wie Mobiltelefonen oder in Fahrzeugen eingebauten Geräten, aktualisiert werden müssen, wird heutzutage die neue Programmversion auf Anforderung vom Benutzer zu dem jeweiligen Gerät übertragen. Dies kann dadurch erfolgen, dass ein solches Gerät per Kabel mit einem Datenserver verbunden und die neue Programmversion dann über diese Datenverbindung auf das mobile Gerät geladen wird oder dass die neue Programmversion auf einem Wechsel-Datenträger, wie einer CD oder DVD, zur Verfügung gestellt wird. Der Datenserver selbst kann die Programmversion wiederum per Datenfernverbindung, wie beispielsweise einer Internet- oder Funkverbindung, erhalten haben. Bei jeder Art von Datenübertragung ist zu berücksichtigen, dass unter Umständen nur relativ begrenzte Datenmengen in vernünftiger Zeit übertragen werden können oder dass eine hohe Datenrate unter Umständen mit hohen Übertragungskosten verbunden sein kann, weshalb man versucht, die zu sendenden Dateien möglichst klein zu halten. Diesen Bestrebungen steht jedoch die zunehmende Komplexität heutiger Betriebssysteme und Anwendungsprogramme entgegen.

In bestimmten industriellen Bereichen, wie beispielsweise bei der Softwareentwicklung oder bei der Pflege elektronischer Datenbanken, ist es andererseits erforderlich, alte Programmversionen gemeinsam mit neuen Programmversionen längere Zeit aufzubewahren, um beispielsweise Änderungen rückverfolgen oder bei Problemen die alte Version wieder beleben zu können. Da dies zu Engpässen bei dem zur Verfügung stehenden Speicherplatz führen kann, wurden Algorithmen entwickelt, welche die Abweichung der neuen von der alten Programmversion ermitteln und daraus eine Datei mit Differenzdaten erzeugen. Die Differenzdaten dienen bei Vorlage der alten Programmversion dazu, die neue Programmversion automatisch zu generieren. Gespeichert werden also nur noch die alte Programmversion und die Differenzdaten-Datei, welche deutlich kleiner als die neue Programmversion ist. Die Algorithmen zur Erzeugung von Differenzdaten werden auch als Delta-Komprimierungs-Algorithmen bezeichnet.

Bei ihnen werden hauptsächlich zwei Klassen unterschieden: die Klasse der Algorithmen, welche die neue Programmversion per Kopieren und Einfügen erstellen, und die Klasse der Algorithmen, welche sich der Einfügen- und Löschen-Operationen bedienen.

Beim Kopieren und Einfügen werden die größtmöglichen übereinstimmenden Bereiche in der alten und neuen Programmversion gesucht. Die übrigen Bereiche werden als neue, einzufügende Bereiche deklariert. Als Differenzdaten gespeichert werden die neuen, einzufügenden Bereiche sowie Daten über die Positionierung bzw. Aneinanderreihung der übereinstimmenden sowie der neuen Bereiche. Ein Kopieren-Einfügen-Algorithmus kann dann bei Bedarf die neue Programmversion aus der alten erstellen, indem er die übereinstimmenden Bereiche aus der alten Programmversion herauskopiert und mit den neuen Bereichen entsprechend der Positionierungsinformation anordnet bzw. aneinanderreiht. Die neue Version wird also vollständig neu aufgebaut.

Beim Einfügen und Löschen werden ebenfalls die größtmöglichen übereinstimmenden Bereiche gesucht. Jedoch enthält die Differenzdaten-Information nicht ganze einzufügende Bereiche, sondern die voneinander abweichenden Bereiche werden detailliert auf Unterschiede untersucht und es wird ein Editier-Skript erstellt, mit dem man die alte Version der voneinander abweichenden Bereiche an die neue Version anpasst. Ein Einfügen-Löschen-Algorithmus erstellt also die neue Programmversion, indem er anhand des Editier-Skripts in der alten Programmversion entsprechende Änderungen vornimmt. Neu hinzugekommene Teile werden eingefügt und weggefallene Teile gelöscht. Die neue Version wird demnach durch Bearbeitung der alten Version erstellt.

Ein Einfügen-Löschen-Algorithmus zur Aktualisierung eines binären Programms (Executable) wird in "Compressing Differences of Executable Code" von Baker, B.S. et al; Workshop on Compiler Support for System Software and ACM Sigplan, 22. April 1999, Seiten 1-10, XP002315222 beschrieben. Zur Reduzierung der Menge der Differenzdaten-Information werden dabei Änderungen im Executable identifiziert, die lediglich auf den Compilier-Vorgang zurückzuführen sind, wie beispielsweise neu berechnete Sprungadressen. Diese werden als untergeordnete Änderungen (secondary changes) bezeichnet. Die untergeordneten Änderungen werden beim Erstellen der neuen Programmversion aus der alten Programmversion, der Differenzdaten-Information und dem Editier-Skript unter Nutzung der Kenntnis über die verwendete Rechnerarchitektur direkt errechnet, so dass die zu den untergeordneten Änderungen gehörenden Daten nicht in der Differenzdaten-Information enthalten sein müssen.

Ein bekannter Kopieren-Einfügen-Algorithmus ist der Xdelta Algorithmus, welcher der GNU General Public License unterliegt. Dieser Algorithmus wird heute bereits bei der Aktualisierung von Rechnerprogrammen auf mobilen Endgeräten mit Hilfe von Differenzdaten verwendet, da die Differenzdaten-Dateien bereits deutlich weniger Speicherplatz und damit Übertragungsbandbreite erfordern als die auf herkömmliche Weise komprimierten Programmdateien selbst. Die zu aktualisierenden Rechnerprogramme liegen in ihrer für den Zielprozessor kompilierten, binären Form vor. Der Algorithmus vergleicht den binären Programmcode der alten und der neuen Programmversion miteinander, sucht nach den größtmöglichen übereinstimmenden Bereichen und merkt sich deren Position, also deren Programmadresse. Die übrigen Bereiche werden als einzufügende Bereiche zu den Differenzdaten hinzugefügt.

Aufgabe der vorliegenden Erfindung ist es, ein Verfahren zur Erzeugung und ein Datenverarbeitungsgerät zur Erzeugung und Versendung von Differenzdaten anzugeben, wobei der von den Differenzdaten benötigte Speicherplatz weiter reduziert werden soll. Eine weitere Aufgabe der Erfindung ist es, ein Verfahren zur Aktualisierung einer alten Programmversion eines Rechnerprogramms mit Hilfe dieser Differenzdaten sowie ein Datenverarbeitungsgerät zum Empfang und zur Verarbeitung dieser Differenzdaten zu finden.

Die Aufgaben werden durch die in den unabhängigen Patentansprüchen angegebenen Verfahren bzw. Datenverarbeitungsgeräte gelöst.

Grundlage der Erfindung ist die Erkenntnis, dass sich innerhalb einer neuen Programmversion Teile des Rechnerprogramms, wie einzelne Funktionen oder Funktionsblöcke, häufig nur gegenüber der alten Version verschoben haben, weil beispielsweise neue Programmteile eingefügt wurden. Im übersetzten, binären Programmcode resultiert daraus eine Änderung vieler, durch Programmbefehle referenzierter Speicheradressen, da sich die Sprungweite von Programmverzweigungen oder auch die Speicherposition von Variablen oder konstanten Daten ändern. Die referenzierten Speicheradressen stellen im binären Programmcode zum einen Operanden von Maschinenbefehlen dar, insbesondere von Sprungbefehlen. Die Sprungbefehle dienen dabei der Verzweigung auf Funktionen und enthalten als Speicheradressen die zugehörigen relativen oder absoluten Programmadressen dieser Funktionen. Zum anderen können die referenzierten Speicheradressen als absolute Speicheradressen im Programm abgelegt sein, auf welche mittels indirekter Zugriffsbefehle zugegriffen wird. Die absoluten Speicheradressen wiederum verweisen auf Daten, wie beispielsweise Variablen oder konstante Werte. Mittels der indirekten Zugriffsbefehle werden also per zweifacher Referenzierung Daten aus dem Speicher gelesen bzw. in den Speicher geschrieben.

Im Folgenden werden die durch Programmbefehle referenzierten Speicheradressen kurz als Adressreferenzen bezeichnet.

Der bekannte Xdelta-Algorithmus erkennt verschobene Programmteile, in denen Adressreferenzen geändert wurden, als nicht übereinstimmende Teile, da er den Code nicht logisch, also nicht inhaltlich, untersucht, sondern einen direkten Eins-zu-Eins-Vergleich macht. Damit werden nur die Programmteile als übereinstimmend gefunden, die absolut dieselbe Befehlsfolge aufweisen.

Die vorliegende Erfindung beruht jedoch auf der Überlegung, dass grundsätzlich die Möglichkeit besteht, Adressreferenzen und deren Änderung automatisch zu ermitteln, indem man den Programmcode interpretiert und nicht nur zeichenweise untersucht. Eine Berechnung von Adressreferenzen wird stets beim standardmäßigen Prozess des Linkens und Lokatierens während der Übersetzung eines Quellcodes in Binärcode ausgeführt. Wird ein Quellcode, der aus mehreren Quelldateien besteht, übersetzt, so werden als erstes die Quelldateien einzeln kompiliert und daraus so genannte Objektdateien generiert. Anschließend fügt der Linker die einzelnen Objektdateien zu einer einzigen Objektdatei zusammen und führt dabei beispielsweise an Stellen, wo Variablen oder Funktionen aufgerufen werden, Adressplatzhalter ein, da die endgültige Position dieser Variablen oder Funktionen im Programm zum Zeitpunkt des Linkens noch nicht bekannt ist. Hat der Linker alle Programmteile platziert, so ersetzt der Lokator die Adressplatzhalter durch entsprechende absolute oder relative Programmadressen. Ein Lokator berechnet also stets aufs Neue die Adressreferenzen von Programmteilen innerhalb ein und desselben Programms.

Die Erfindung geht nun davon aus, dass bei einer Aktualisierung einer alten Programmversion durch eine neue Programmversion die geänderten Adressreferenzen automatisch berechnet werden können, da man die Position aller Programmteile sowohl in der alten als auch in der neuen Programmversion kennt. Die neuen, absoluten oder relativen Adressreferenzen können explizit von einem Verfahren zur Erzeugung von Differenzdaten ermittelt und den Differenzdaten zugeordnet werden, so dass bei einer Aktualisierung der alten Programmversion die Adressreferenzen entsprechend korrigiert werden können. Die Programmteile, in welchen lediglich die Adressreferenzen geändert werden müssen, werden als neue Programmteile eingestuft und damit nicht als Differenzdaten gespeichert, was den Speicherplatzbedarf der Differenzdaten bereits deutlich reduziert.

In einer bevorzugten Ausführung der Erfindung werden die Differenzdaten noch weiter reduziert, indem auch die neuen Adressreferenzen nicht den Differenzdaten zugeordnet werden. Da der Algorithmus zur Aktualisierung der Differenzdaten ebenfalls die alte und neue Programmversion kennt, ist er ebenso wie der Algorithmus zur Generierung der Differenzdaten in der Lage, die neuen Adressreferenzen explizit zu berechnen und in der neuen Programmversion zu korrigieren.

Zur Berechnung der geänderten Adressreferenzen ist die Kenntnis erforderlich, welche Programmteile in der alten Programmversion welchen Programmteilen in der neuen Programmversion entsprechen. Diese, bis auf geänderte Adressreferenzen, gleich gebliebenen Programmteile müssen also als zueinander passend identifiziert werden, wofür das erfindungsgemäße Verfahren zur Erzeugung von Differenzdaten den Binärcode der neuen und alten Programmversion inhaltlich untersucht.

Der Binärcode besteht aus einer Abfolge von Befehlsworten, deren Länge durch den verwendeten Prozessor bestimmt ist, und die von dem Prozessor direkt verstanden werden können. Die Befehlsworte können wiederum Maschinenbefehle sein, bestehend aus einem Operator, also dem eigentlichen Befehlsteil, sowie einem Operanden, der aus einem oder mehreren Elementen bestehen kann, oder es sind direkt im Binärcode abgelegte Werte und absolute Adressen von Variablen.

Innerhalb des Rechnerprogramms veränderte Adressreferenzen können nun daran erkannt werden, dass entweder die Abfolge der Operatoren der Maschinenbefehle gleich geblieben ist und sich nur die Operanden von Sprung- bzw. Zugriffsbefehlen geändert haben oder dass eine veränderte Speicheradresse von einem gleich gebliebenen Maschinenbefehl referenziert, z. B. geladen, wird.

Der erfindungsgemäße Algorithmus findet damit sowohl die absolut gleichen Programmteile als auch die Programmteile, welche bis auf veränderte Adressreferenzen gleich geblieben sind. All diese Programmteile werden als so genannte gleiche Programmteile, also als zwischen der alten und der neuen Programmversion übereinstimmende Programmteile eingeordnet.

Der vom Algorithmus als unverändert erkannte Programmbereich bestehend aus vielen einzelnen Programmteilen wird damit deutlich gegenüber herkömmlichen Delta-Komprimierungs-Algorithmen vergrößert. Die übrig gebliebenen, als neu einzuordnenden Programmteile belegen demnach einen viel kleineren Speicherplatz, weshalb die Erfindung insbesondere in den Fällen zur Aktualisierung von Rechnerprogrammen eingesetzt werden kann, bei denen nur eine schmalbandige bzw. kostenintensive Datenübertragung möglich ist, wie beispielsweise bei Verwendung von GSM-Mobilfunk.

Die von dem Algorithmus gespeicherten Differenzdaten umfassen wie bisher alle neuen Programmteile sowie Positionsinformationen in Form von Programmadressdaten für die neuen wie auch für die gleichen Programmteile, wobei jedoch der Unterschied gegenüber herkömmlichen Algorithmen darin besteht, dass weniger Programmteile den neuen und damit zu übertragenden Programmteilen zugeordnet werden.

In einer bevorzugten Ausführung der Erfindung untersucht der Algorithmus die Programmversionen iterativ auf gleiche und neue Programmteile. Im ersten Schritt sucht er zusammenhängende Bereiche absolut gleicher Befehlsworte heraus. Dabei beginnt der Algorithmus mit den größtmöglichen, zusammenhängenden Bereichen und geht dann hinunter bis zu einer minimalen Größe. Die systembedingt minimale Größe beträgt eine Länge eines Befehlswortes. In einer speziellen Ausgestaltung kann die minimale Größe eines zusammenhängenden Bereiches auch als Vielfaches eines Befehlswortes vorgegeben werden, um den Vorgang der Differenzdatenerzeugung zu optimieren.

Im zweiten Schritt werden die übrig gebliebenen und damit vorerst als neu erkannten Programmteile auf relativ gleiche Maschinenbefehle und die gleichen Programmteile auf indirekte Zugriffsbefehle durchsucht. Die relativ gleichen Maschinenbefehle sind Befehle, die eine Adressreferenz als Operanden haben und deren Operator sowie relative Position zu den angrenzenden gleichen Programmteilen übereinstimmen. Der Wert des Operanden weicht jedoch in der neuen von dem in der alten Programmversion ab. Häufig folgen die relativ gleichen Maschinenbefehle als nächste Befehle direkt am Ende eines gleichen Programmteils oder sie sind zwischen zwei gleiche Programmteile eingeschlossen. Sie können jedoch auch ausschließlich von neuen Programmteilen umgeben sein. Sofern der Operand, also die Adressreferenz, eines relativ gleichen Maschinenbefehls auf einen bereits als gleichen Programmteil eingestuften Programmbereich verweist, wird die Befehlszeile mit dem relativ gleichen Maschinenbefehl als gleicher Programmteil klassifiziert. Sofern diese Befehlszeile an einen anderen gleichen Programmteil angrenzt, wird sie diesem zugeordnet.

Die zu gleichen Programmteilen gehörenden, indirekten Zugriffsbefehle verweisen auf Befehlsworte, welche absolute Programmadressen als Adressreferenzen enthalten. Gehören diese Befehlsworte zu als neu eingestuften Programmteilen und verweisen die in ihnen enthaltenen absoluten Programmadressen wiederum auf gleiche Programmteile, so werden die Befehlsworte mit den absoluten Programmadressen ebenfalls als gleiche Programmteile klassifiziert.

Der zweite Schritt wird danach solange wiederholt, bis alle Befehle mit auf gleiche Programmteile verweisenden Adressreferenzen gefunden sind.

In einer weiteren bevorzugten Ausführung wird nach Abschluss der Generierung der Differenzdaten eine Validierung der Differenzdaten durchgeführt. Dies erfolgt dadurch, dass anhand der Differenzdaten sowie der alten Programmversion eine neue Programmversion erstellt wird, genau so wie es auch auf dem mobilen Endgerät bei der Aktualisierung der alten Programmversion stattfinden würde. Aus der alten Programmversion werden also die gleichen Programmteile herauskopiert und an den entsprechenden Programmadressen der neuen Programmversion eingefügt. Die Adressdaten können auch als Kopier-Adressdaten bezeichnet werden. Sie beschreiben entweder den Startpunkt und die Länge des entsprechenden Programmteils oder Start- und Endpunkt.

Neben den Positionen der gleichen Programmteile werden den Differenzdaten auch die neuen Programmteile entnommen und zwischen die gleichen Programmteile in die neue Programmversion eingesetzt. Dies erfolgt an den Programmadressen, die durch so genannte Einfügungs-Adressdaten angegeben werden. Anschließend oder auch schon während des Kopieren bzw. Einfügens der Programmteile werden die Programmteile nach Adressreferenzen durchsucht und es wird geprüft, auf welche gleichen Programmteile die Adressreferenzen in der alten Programmversion verweisen. Entsprechend der bekannten neuen Position dieser gleichen Programmteile werden die Adressreferenzen dann korrigiert. Abschließend wird die neu erstellte Programmversion mit der original vorhandenen, neuen Programmversion verglichen und sofern keine Abweichung festzustellen ist, können die Differenzdaten als korrekt eingestuft werden.

Während des Validierungsvorgangs können bestimmte Fehler entdeckt werden, die dadurch bedingt sind, dass im Programmcode ein längerer Satz von Daten enthalten ist, beispielsweise ein Textstring, welcher in seiner binären Form mit einem oder mehreren in der alten Programmversion enthaltenden Befehlsworten übereinstimmt. Dieser Satz von Daten würde also als gleicher Programmteil missinterpretiert werden, was dazu führt, dass die während der Validierung erstellte Programmversion nicht mit der eigentlichen neuen Programmversion übereinstimmt. Solche Missinterpretationen werden in einer weiteren Ausgestaltung der Erfindung als Sonderfall erkannt. Als eine mögliche Abhilfe werden die Befehlsworte mit den missinterpretierten Daten aus der Gruppe der gleichen Programmteile entfernt und als neue Programmteile eingestuft. Eine andere Möglichkeit kann in den Fällen gewählt werden, in denen ein missinterpretierter Satz von Daten sowohl in der alten als auch der neuen Programmversion vorhanden ist. Dann wird die Position dieser Daten in der alten und neuen Programmversion gespeichert und unter einer Kennzeichnung als zu kopierender Datenteil den Differenzdaten hinzugefügt. Bei dieser Vorgehensweise entstehen gegenüber der Einstufung der Daten als neue Programmteile weniger zu übertragende Differenzdaten.

Auf der Empfängerseite der Differenzdaten muss ein zum Erzeugungsverfahren kompatibles Auswerteverfahren zur Anwendung kommen, um aus den Differenzdaten und der alten Programmversion die korrekte neue Programmversion erstellen zu können. Ein solches erfindungsgemäßes Verfahren zur Aktualisierung der alten Programmversion kopiert mit Hilfe der in den Differenzdaten enthaltenden Kopier-Adressdaten die gleichen Programmteile aus der alten Programmversion heraus und positioniert sie entsprechend in der neuen Programmversion. Die neuen Programmteile werden mit Hilfe der Einfügungs-Adressdaten zwischen die gleichen Programmteile eingefügt. Danach bzw. bereits während des Umkopierens der gleichen und des Einfügens der neuen Programmteile werden nacheinander alle relativ gleichen Maschinenbefehle sowie alle indirekten Zugriffsbefehle aus den Programmteilen herausgesucht, interpretiert und korrigiert, d.h. es wird ausgewertet, auf welchen gleichen Programmteil eine Adressreferenz eines Befehls in der alten Programmversion verwiesen hat und um wie viele Wortlängen bzw. Byte sich die Position dieses Programmteils in der neuen Programmversion verändert hat. Die daraus resultierende neue Adressreferenz wird entsprechend in der neuen Programmversion eingetragen. Je nach Art der Adressreferenz wird der Korrekturwert entweder als relative Verschiebung berechnet und demzufolge die entsprechende Anzahl an Bytes zu der alten, relativen Speicheradresse addiert bzw. von ihr abgezogen oder er wird als absolute Position und damit absolute Speicheradresse bestimmt.

Das erfindungsgemäße Datenverarbeitungsgerät zur Erzeugung und Weiterleitung von Differenzdaten enthält als Kern eine Recheneinheit, beispielsweise einen Mikroprozessor, welche das Verfahren zur Erzeugung von Differenzdaten zur Ausführung bringt, sowie mindestens einen Arbeitsspeicher zur Zwischenspeicherung von Daten. Zur dauerhaften Speicherung der alten und neuen Programmversion sowie der Differenzdaten ist weiterhin ein nichtflüchtiger Datenspeicher, wie eine Festplatte oder ein Flash-Speicher, vorhanden. Des Weiteren weist das Datenverarbeitungsgerät eine Kommunikationsschnittstelle auf, mit der man eine Datenverbindung entweder drahtlos oder per Kabel zu mindestens einem weiteren, empfangsbereiten Datenverarbeitungsgerät aufbauen kann, um über diese Kommunikationsschnittstelle die Differenzdaten zu übertragen. Eine solche Kommunikationsschnittstelle kann beispielsweise eine GSM-Schnittstelle oder ein Netzwerk-Anschluss sein.

In einer besonderen Ausgestaltung enthält das Datenverarbeitungsgerät weiterhin eine Eingabeeinheit, wie ein Keyboard oder eine Maus, um damit die minimale Größe eines als gleich einzustufenden Programmteils vorgeben zu können. Diese Eingabemöglichkeit dient der Optimierung des Verfahrens zur Erzeugung der Differenzdaten und damit zur Beeinflussung der Speichergröße der Differenzdaten. Die verfahrensbedingte minimale Größe beträgt einen Maschinenbefehl, da bei den gleichen Programmteilen Operator und Operand übereinstimmen müssen. Davon abweichend kann ein Benutzer die minimale Größe eines gleichen Programmteils als Vielfaches dieser kleinsten Einheit angeben. Dementsprechend berücksichtigt dann die Recheneinheit diese Vorgabe, indem sie kleinere gleiche Programmteile den neuen Programmteilen zuordnet.

Ein erfindungsgemäßes Datenverarbeitungsgerät zum Empfang und zur Verarbeitung von Differenzdaten beinhaltet als Kern eine Recheneinheit, die das Verfahren zur Aktualisierung einer alten Programmversion ausführt. Des Weiteren sind vorhanden ein Arbeitsspeicher zur Zwischenspeicherung von Daten, ein nichtflüchtiger Datenspeicher zur Speicherung der alten und neuen Programmversion sowie der Differenzdaten sowie eine Kommunikationsschnittstelle, mit der eine drahtlose oder drahtgebundene Verbindung zu einem sendebereiten Datenverarbeitungsgerät aufgebaut werden kann, um vom diesen Datenverarbeitungsgerät die Differenzdaten zu empfangen.

In einer bevorzugten Ausgestaltung überprüft die Recheneinheit nach dem Empfang der Differenzdaten anhand einer Prüfsumme, ob die Übertragung fehlerfrei erfolgt ist. In einer weiteren Ausgestaltung wird außerdem die Echtheit der Differenzdaten anhand einer mitgesendeten Signatur überprüft, um zu verifizieren, ob die Daten von einem berechtigten Sender verschickt wurden.

Sollte anhand der Prüfsumme oder der Signatur festgestellt werden, dass die Differenzdaten ungültig sind, wird die Aktualisierung abgebrochen und der Fehler kann in einem Fehlerspeicher festgehalten werden.

Der Vorgang des Erstellens der neuen Programmversion kann entweder direkt nach erfolgreichem Empfang gestartet werden oder er wird durch ein bestimmtes Ereignis, wie den Ablauf der Gültigkeit der alten Version, ausgelöst.

Die neu erstellte Programmversion kann wiederum anhand einer Prüfsumme auf ihre Korrektheit überprüft werden und im Fehlerfall durch die alte Programmversion ersetzt werden, wofür diese gesondert gespeichert worden sein muss. Auch in diesem Fall wird eine entsprechende Fehlermeldung gespeichert.

Die Erfindung wird nachfolgend anhand eines Ausführungsbeispiels und der Zeichnung näher erläutert. Es zeigen:
- Fig. 1: Aktualisierung eines aus ursprünglich zwei Funktionen bestehenden Rechnerprogramms;

- Fig. 2: ein Datenverarbeitungsgerät zur Erzeugung und Versendung von Differenzdaten;
- Fig. 3: ein Datenverarbeitungsgerät aus Fig. 2 in Kommunikation mit einer Datenzentrale sowie zwei Datenverarbeitungsgeräten zum Empfang und zur Verarbeitung von Differenzdaten;

Als Beispiel wird der Vorgang der Aktualisierung einer alten Programmversion bei in Fahrzeugen eingebauten Mautgeräten betrachtet. Das Datenverarbeitungsgerät zur Erzeugung der Differenzdaten steht hierbei in Verbindung mit einer so genannten Datenzentrale, also einem zentralen Kommunikationsrechner, welcher die Aktualisierung auf mehreren Mautgeräten veranlassen kann.

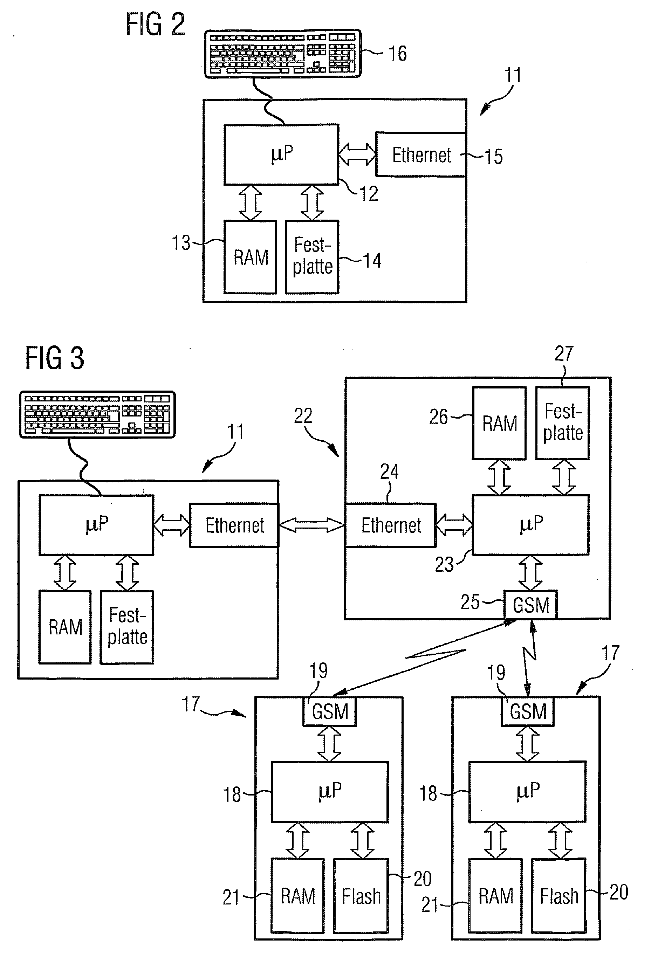

In Figur 2 ist ein solches Datenverarbeitungsgerät 11 zur Erzeugung von Differenzdaten abgebildet. Zu sehen sind die Recheneinheit 12, die das Verfahren zur Generierung der Differenzdaten ausführt und die mit einer Ethernet-Kommunikationsschnittstelle 15 verbunden ist, sowie ein Arbeitsspeicher 13 und ein nichtflüchtiger Datenspeicher 14, der als Festplatte ausgeführt ist. Die Recheneinheit 12 ist außerdem mit einem als Eingabeeinheit 16 dienenden Keyboard verbunden, mit welchem Vorgaben bezüglich der minimalen Größe eines gleichen Programmteils gemacht oder auch der Übertragungsvorgang von Differenzdaten zu Mautgeräten per Hand gesteuert werden kann. Zur Überprüfung der Eingaben ist außerdem eine grafische Anzeigeeinheit 22 mit der Recheneinheit 12 verbunden.

In Figur 3 ist das Datenverarbeitungsgerät 11 verbunden mit einer Datenzentrale 22 dargestellt. Die Datenzentrale 22 wiederum kommuniziert per GSM-Funk mit zwei als Mautgeräte ausgeführten Datenverarbeitungsgeräten 17. Die Datenzentrale 22 besitzt neben einer Recheneinheit 23 eine Ethernet-Schnittstelle 24, eine GSM-Schnittstelle 25 sowie Arbeitsspeicher 26 und nichtflüchtigen Datenspeicher 27. In den Datenverarbeitungsgeräten 17 ist je eine Recheneinheit 18, die das Verfahren zur Aktualisierung alter Programmversionen ausführt, angeordnet. Diese ist mit einer GSM-Kommunikationsschnittstelle 19, einem Arbeitsspeicher 21 und einer als nichtflüchtiger Datenspeicher 20 dienenden Flash-ROM verbunden. Ein- und Ausgabeeinheiten sind bei diesen Geräten nicht unbedingt erforderlich, da sie auch bedienerunabhängig arbeiten können.

In dem folgenden Beispiel besteht die alte, auf den Mautgeräten laufende Programmversion eines Rechnerprogramms aus zwei Funktionen, wobei die zweite Funktion aus der ersten heraus aufgerufen wird.
Die Funktionen haben folgenden C-Quellcode:

```
      void FunctionA(void)
      {
            FunctionB();
      }
      void FunctionB(void)
      {
            int y=1;
      }
```

Für einen ARM7-Prozessor sieht die mnemonische Form der Maschinenbefehle folgendermaßen aus:
FunctionA:
   stmdb r13!,{r14}
   bl FunctionB
   ldmia r13!,{pc}
FunctionB:
   mov r0,#1
   mov pc, r14

In der neuen Programmversion wurde eine dritte Funktion eingefügt, und zwar zwischen die Funktionen A und B.

```
      void FunctionA(void)
      {
            FunctionB () ;
      }
      void FunctionC(void)
      {
            int x=0;
      }
      void FunctionB(void)
      {
            int y=1;
      }
```

Die Übersetzung für FunctionC hat die Form:
Function C:
   mov r0, #0
   mov pc, r14.

Da für die Erfindung die Befehle mit Adressreferenzen, wie hier der Branchbefehl bl, die entscheidende Rolle spielen, wird in diesem Beispiel lediglich deren binäre Form betrachtet, während zur Erleichterung der Darstellung für die übrigen Befehle die mnemonische Form beibehalten wird.

Der Operator des Befehls "bl FunctionB" ist der Teil "bl" (Branch and Link), welcher binär als "0xeb" geschrieben wird. Als Operand wird die relative Position der FunctionB zum Sprungbefehl eingetragen. Da in der alten Programmversion zwischen der Programmadresse der Branchbefehls und der FunctionB zwei Befehlslängen liegen, müsste also die relative Sprungadresse 8 Byte entsprechen, da der ARM7-Prozessor ein 32 Bit-Prozessor ist. Im Branchbefehl "bl" wird jedoch die relative Sprungadresse bereits inklusive eines Offsets von 8 Byte interpretiert, weshalb der Operand des Branchbefehls 0x000000 lautet.

In der folgenden Tabelle 1 werden die Übersetzungen für den ARM7 in der alten und neuen Version gegenübergestellt. Wie in Programmzeile 2 der neuen Version zu erkennen ist, hat sich aufgrund der Verschiebung der FunctionB um zwei Befehlslängen nach unten die relative Sprungadresse des Branchbefehls um 8 Byte (0x000002) erhöht.

Ein herkömmlicher Deltaalgorithmus würde bei einem Vergleich die Programmzeilen 2 und 4-5 als neue Programmteile identifizieren.

**Tabelle 1: Mnemonik von alter und neuer Version im Beispiel 1**

| Programmzeile | Alte Programmversion | Neue Programmversion |
|---|---|---|
| 1 | stmdb r13!,{r14} | stmdb r13!,{r14} |
| 2 | 0xeb000000 | 0xeb000002 |
| 3 | ldmia r13!, {pc} | ldmia r13!,{pc} |
| 4 | mov r0, #1 | mov r0, #0 |
| 5 | mov pc, r14 | mov pc, r14 |
| 6 | | mov r0,#1 |
| 7 | | mov pc, r14 |

Dagegen erkennt der erfindungsgemäße Algorithmus zur Erzeugung von Differenzdaten die Zeile 1 als ersten gleichen Programmteil sowie die Zeile 3 als zweiten und die Zeilen 6 und 7 als dritten gleichen Programmteil. Der Algorithmus geht von der alten Programmversion aus und versucht, die dort vorhandenen Programmzeilen in der neuen Version wieder zu finden. Hat sich die Position einer Zeile verschoben, so werden die in der alten Version an diese Zeile anschließenden Zeilen ebenfalls an der verschobenen Position gesucht. Die aufeinander folgenden Zeilen 4 und 5 der alten Version werden also in den Zeilen 6 und 7 wieder entdeckt, weshalb es zu keiner Verwechslung zwischen den gleich lautenden Programmzeilen 5 und 7 kommen kann, sondern die neue Zeile 5 eindeutig einem neuen Programmteil zugeordnet wird.

Der Algorithmus findet anschließend bei der Suche nach relativ gleichen Maschinenbefehlen den Sprungbefehl in Zeile 2, welcher sowohl an den ersten als auch an den zweiten gleichen Programmteil angrenzt. In beiden Programmversionen verweist dieser Sprungbefehl auf denselben gleichen Programmteil, weshalb der Befehl dem ersten gleichen Programmteil hinzugefügt wird. Der zweite gleiche Programmteil schließt sich daraufhin direkt an den ersten gleichen Programmteil an, so dass diese beiden zu einem einzigen gleichen Programmteil zusammengeführt werden können. Als neue Programmteile identifiziert der Algorithmus also lediglich die Zeilen 4 und 5 der neuen Version.

In den Differenzdaten sind dann enthalten der Inhalt der Programmzeilen 4 und 5 der neuen Programmversion in Verbindung mit Positionierungsinformationen wie beispielsweise der expliziten Programmadresse, welche hier durch die Zeilennummer verdeutlicht wird. Des Weiteren enthalten die Differenzdaten die Angabe, dass sich zwischen den neuen Zeilen 1 bis 3 derselbe gleiche Programmteil befindet wie zwischen den alten Zeilen 1 bis 3 und dass die Zeilen 6 und 7 der neuen Version den Zeilen 4 und 5 der alten Version entsprechen.

Die Speichergröße der Differenzdaten wird also nicht nur dadurch reduziert, dass die Zeile 2 nicht als gleicher Programmteil inklusive Einfügungs-Adressdaten gespeichert werden muss, sonder auch dadurch, dass die Zeilen 1 bis 3 als zusammenhängender, gleicher Programmteil erkannt werden, zu denen nur ein und nicht zwei Sätze an Kopier-Adressdaten erfasst werden müssen. Die an dem vereinfachten Beispiel deutlich gemachte Reduzierung der Differenzdaten vervielfacht sich mit zunehmender Programmlänge und -komplexität.

Ein zweites Beispiel soll die Suche nach Adressreferenzen bei indirekten Zugriffsbefehlen verdeutlichen.

Die Programmversionen bestehen aus jeweils zwei, in verschiedenen Quellcodedateien (Modull,c und Modul2.c) abgelegten Teilen des Gesamtprogramms.

```
 Alte Version:
       Modul1.c:
       const int x = 1;
       Modul2.c:
       void Function1{void)
       {
             int local;
             local = x;
       }
 Neue Version:
       Modu11.c:
       const int y = 2;
       const int x = 1;
       Modul2.c:
       void Function1{void)
       {
             int local;
             local = x;
       }
```

Modul2.c ist also in beiden Programmversionen gleich, während in Modul1.c die Deklaration der Konstanten y neu hinzugekommen ist.

Ein Auszug der zugehörigen Übersetzung für den ARM7 ist in Tabelle 2 zu finden, wobei der Binärcode und die entsprechende Mnemonik getrennt dargestellt sind.

An Programmadresse 0x41000104 steht in beiden Versionen der indirekte Zugriffsbefehl "ldr r0, 0x41000110" (Lade Register r0 von Adresse 0x41000110), welcher als Adressreferenz die absolute Programmadresse 0x41000110 hat. An dieser ersten Adresse findet man den Verweis auf eine zweite Adresse und damit eine zweite Adressreferenz, die 0x41000200 bzw. 0x41000204. An der zweiten Adresse befindet sich die Konstante x. Mit dem Befehl "1dr r0, 0x41000110" wird also ein Wert von einer zweiten Adressreferenz geladen, wobei die zweite Adressreferenz mittels der in dem Befehl enthaltenen ersten Adressreferenz gefunden wird.

Ein erfindungsgemäßer Algorithmus zur Erzeugung von Differenzdaten erkennt beim Vergleich des Binärcodes der Programmversionen die Zeilen von 0x41000104 bis 0x4100010c als ersten gleichen Programmteil. Ebenfalls als gleichen Programmteil erkennt er die Zeilen 0x41000200 in der alten und 0x41000204 in der neuen Programmversion.

**Tabelle 2: Mnemonik von alter und neuer Version im Beispiel 2**

| | Alte Programmversion | | Neue Programmversion | |
|---|---|---|---|---|
| Programm-adresse | Binärcode | Mnemonik | Binärcode | Mnemonik |
| 0x410001 04 | Oxe59f10 04 | ldr r0, 0x41000110 | 0xe59f00 04 | ldr r0,Ox41000110 |
| 0x410001 08 | 0xe59100 00 | ldr r1, [r0,#0] | Oxe59100 00 | ldr r1, [r0,#0] |
| 0x410001 0c | 0xe1a0f0 0e | mov pc,r14 | 0xe1a0f0 0e | mov pc,r14 |
| 0x410001 10 | 0x410002 00 | dcd 0x41000200 | 0x410002 04 | dcd 0x41000204 |
| ··· | | | | |
| 0x410002 00 | 0x000000 01 | dcd 0x00000001 | 0x000000 02 | dcd 0x00000002 |
| 0x410002 04 | | | 0x000000 01 | dcd 0x00000001 |

In den als neu einzustufenden Programmteilen - Zeilen 0x41000110 und 0x41000200 in der neuen Programmversion - wird nach Maschinenbefehlen mit einer Adressreferenz als Operanden gesucht. In keiner der Zeilen ist jedoch ein Maschinenbefehl enthalten, da beide Zeilen zum so genannten "Literal Pool" oder auch Literalbereich gehören. In dem Beispiel sind die festen Werte 1 und 2 Literale. Der Literalbereich stellt dann in diesem Zusammenhang einen Bereich im Adressraum dar, in dem die Literale sowie die zugehörigen Adressen abgelegt sind.

Neben der Suche in den neuen Programmteilen nach Maschinenbefehlen mit Adressreferenzen als Operanden werden die gleichen Programmteile auf indirekte Zugriffsbefehle mit Adressreferenzen durchsucht. Dabei wird der Befehl ldr in Zeile 0x41000104 gefunden, dessen Adressreferenz auf eine zweite Adressreferenz verweist, die auf den zweiten gleichen Programmteil zeigt. Da damit die bisher als neu eingestufte Programmzeile 0x41000110 ein Befehlswort (0x41000200 bzw. 0x41000204) mit einer Adressreferenz auf einen gleichen Programmteil enthält, wird dieses Befehlswort als ebenfalls gleicher Programmteil eingeordnet. Da es an den ersten gleichen Programmteil direkt anschließt, wird es diesem zugeordnet.

Die Differenzdaten können nun, nachdem sie noch mit einem Standardkomprimierungsverfahren weiter in der Speichergröße reduziert wurden, von der Maut-Zentrale an die in den einzelnen Fahrzeugen eingebauten Mautgeräte übertragen werden. Ein solcher Vorgang wird beispielsweise dann ausgelöst, wenn sich ein zu aktualisierendes Mautgerät ein nächstes Mal bei der Zentrale anmeldet, um Straßenbenutzungsdaten auszutauschen. Direkt nach dem ersten Kontakt zur Zentrale sendet diese eine Aktualisierungsaufforderung an das Mautgerät, woraufhin das Mautgerät in den Empfangsmodus für Differenzdaten geht.

Nachdem das Datenverarbeitungsgerät 11 die Differenzdaten bestimmt hat, sendet es diese per Ethernetverbindung an die Datenzentrale 22. Diese wartet darauf, dass sich bisher noch nicht aktive Mautgeräte neu bei ihm anmelden. So könnten beispielsweise zwei LKW's einer Flotte gerade für eine Lieferfahrt gestartet worden sein und die in den LKW's eingebauten Datenverarbeitungsgeräte 17 melden sich bei der Datenzentrale 22 zur nächsten Erfassung von Straßenbenutzungsgebühren. Die Datenzentrale 22 fordert daraufhin die Geräte 17 zum Empfang von Differenzdaten auf. Nachdem die Differenzdaten per GSM an die Mautgeräte übertragen worden sind, prüfen die Mautgeräte anhand einer mitgeschickten Prüfsumme, ob die Übertragung fehlerfrei erfolgt ist. Mittels eines vorab in den Mautgeräten abgelegten Schlüssels wird des Weiteren überprüft, ob eine mit den Differenzdaten übertragene Signatur korrekt ist, d.h. ob die Differenzdaten aus einer vertrauenswürdigen Quelle stammen. Anschließend kann mit dem Aktualisierungsvorgang des in den Mautgeräten abgelegten alten Rechnerprogramms begonnen werden.

Anders als in Figur 3 ist es auch möglich, dass das Datenverarbeitungsgerät 11 selbst als Zentrale arbeitet und demnach direkt eine Datenverbindung zu den Mautgeräten aufbauen und die Differenzdaten an diese übertragen kann.

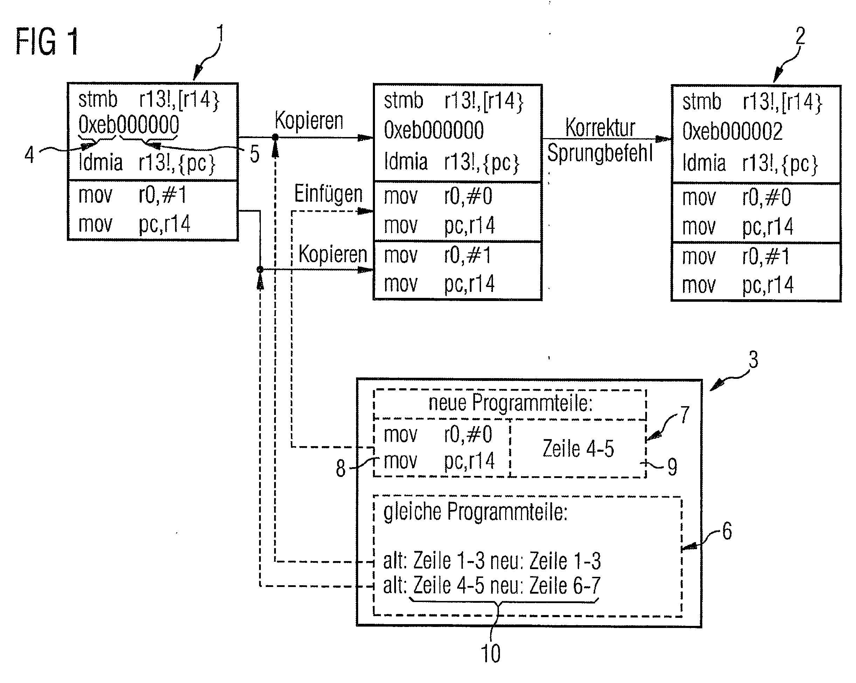

Figur 1 zeigt eine schematisierte Darstellung der Aktualisierung des oben beschriebenen ersten Programmbeispiels. Die alte Programmversion 1 dient dem Aktualisierungsverfahren als Kopiervorlage. Die Kopier-Adressdaten 10, welche zum die Positionierung der gleichen Programmteile beschreibenden ersten Teil 6 der Differenzdaten 3 gehören, geben genau an, welche Teile aus der alten Programmversion 1 herauskopiert und an welcher Stelle diese in die neue Programmversion 2 hineinkopiert werden müssen. In dem abgebildeten Beispiel ist nur der Sprungbefehl als einziger Maschinenbefehl in seiner binären Form dargestellt. Dieser kann in den Operator 4 ("0xeb") und den Operanden 5 ("0x000000") unterteilt werden.

Mit Hilfe der zum zweiten Teil 7 der Differenzdaten 3 gehörenden Einfügungs-Adressdaten 9 kann der neue Programmteil 8 zwischen die gleichen Programmteile eingefügt werden.

Anschließend sucht das Aktualisierungsverfahren in den gleichen Programmteilen die Befehlsworte mit Adressreferenzen und findet den Befehl 0xeb000000, welcher ursprünglich auf die Programmzeile 4 verwiesen hat. Dass diese Programmzeile jetzt in Zeile 6 zu finden ist, weiß der Algorithmus aus den Kopier-Adressdaten. Entsprechend kann er die relative Sprungadresse als 4 Befehlslängen berechnen und da der Algorithmus den Befehl 0xeb decodiert hat, ist ihm auch bekannt, dass die relative Sprungadresse mit einem Offset von 2 Befehlen angegeben wird. Als neuen Operanden 5 berechnet der Algorithmus demnach die 0x000002 und trägt sie in Zeile 2 ein. Die neue Programmversion 2 kann nun anhand einer weiteren Prüfsumme auf ihre Richtigkeit untersucht werden.
Wurde die Aktualisierung erfolgreich ausgeführt startet das jeweilige Mautgerät automatisch die Ausführung der neuen Programmversion.

In dem zweiten Programmbeispiel findet das Aktualisierungsverfahren in den gleichen Programmteilen den ldr-Befehl aus Zeile 0x41000104 sowie dessen Verweis auf die zweite Adressreferenz im Literalbereich an Programmadresse 0x41000110. Die zweite Adressreferenz lautet in der alten Programmversion 0x41000200. Die zugehörige Programmzeile (0x00000001) hat sich in der neuen Version an die absolute Adresse 0x41000204 verschoben. Der Aktualisierungsalgorithmus trägt diese neue Adressreferenz in der neuen Programmversion ein.

## Patentansprüche

1. Verfahren zur Erzeugung von Differenzdaten (3) zwischen einer zu aktualisierenden, alten Programmversion (1) eines Rechnerprogramms und einer neuen Programmversion (2) des Rechnerprogramms, wobei
- die neue Programmversion (2) aus den Differenzdaten (3) und der alten Programmversion (1) erstellbar ist,
- der binäre Programmcode der neuen (1) und der alten Programmversion (2) miteinander verglichen wird, welcher aus Befehlsworten besteht, und
- gleiche Programmteile, die sowohl in der alten (1) als auch in der neuen (2) Programmversion vorhanden sind und mindestens ein Befehlswort umfassen, bestimmt werden sowie Kopier-Adressdaten (10), welche die Positionierung der gleichen Programmteile innerhalb der alten (1) und innerhalb der neuen (2) Programmversion bestimmen, als erster Teil (6) der Differenzdaten (3) gespeichert werden,
**gekennzeichnet durch** die Schritte:
- Bestimmung eines gleichen Programmteils als Zusammensetzung aus im binären Programmcode der alten (1) und der neuen (2) Programmversion gleich gebliebene Abfolge von absolut gleichen Befehlsworten und von Befehlsworten, die Adressreferenzen enthalten, sowie aus Befehlsworten, die Adressreferenzen enthalten, welche auf andere, absolut gleiche Befehlsworte verweisen,
- Einordnung der nicht gleichen und damit übrig gebliebenen, im Programmcode der neuen Programmversion (2) enthaltenen Programmteile als neue Programmteile (8),
- Speicherung der neuen Programmteile (8) und von Einfügungs-Adressdaten (9), welche die Positionierung der neuen Programmteile (8) innerhalb des Programmcodes der neuen Programmversion (2) bestimmen, sowie von Korrekturdaten zur Korrektur der Adressreferenzen, wobei die neuen Programmteile (8), die Einfügungs-Adressdaten (9) und die Korrekturdaten einen zweiten Teil (7) der Differenzdaten (3) bilden.

2. Verfahren nach Anspruch 1, **dadurch gekennzeichnet, dass** die Bestimmung der gleichen Programmteile iterativ erfolgt, indem
- zuerst nur absolut gleiche Befehlsworte als gleiche Programmteile erkannt werden,
- anschließend die gleichen und neuen Programmteile (8) auf Befehlsworte mit Adressreferenzen durchsucht werden,
- sofern die Adressreferenzen auf gleiche Programmteile verweisen, die zugehörigen Befehlsworte als gleiche Programmteile eingeordnet werden,
- woraufhin erneut die Suche nach Adressreferenzen beginnt, die auf gleiche Programmteile verweisen.

3. Verfahren nach Anspruch 2, **dadurch gekennzeichnet, dass** zuerst gleiche Programmteile als zusammenhängende Folgen von absolut gleichen Befehlsworten gesucht werden, wobei eine Folge eine minimale Anzahl an absolut gleichen Befehlsworten aufweist.

4. Verfahren nach einem der vorhergehenden Ansprüche 2 oder 3, **dadurch gekennzeichnet, dass** neue Programmteile auf relativ gleiche Maschinenbefehle durchsucht werden, bei denen der Operator (4) in beiden Programmversionen vorhanden ist und der Operand (5) eine Adressreferenz angibt, die auf einen gleichen Programmteil verweist.

5. Verfahren nach einem der vorhergehenden Ansprüche 2 oder 3, **dadurch gekennzeichnet, dass** gleiche Programmteile auf indirekte Zugriffsbefehle durchsucht werden, deren Operand auf eine Adressreferenz innerhalb eines neuen Programmteils verweist und die Adressreferenz wiederum auf einen gleichen Programmteil verweist, woraufhin das zur Adressreferenz gehörende Befehlswort ebenfalls als gleicher Programmteil klassifiziert wird.

6. Verfahren nach einem der vorhergehenden Ansprüche, **dadurch gekennzeichnet, dass** nach Abschluss der Generierung der Differenzdaten (3) eine Validierung der Differenzdaten (3) durchgeführt wird, indem
- eine Kopie der neuen Programmversion erstellt wird, wobei die gleichen Programmteile aus der alten Programmversion (1) an die Position der Kopier-Adressdaten (10) kopiert und die neuen Programmteile (8) an die Position der Einfügungs-Adressdaten (9) eingefügt werden,
- alle auf gleiche Programmteile verweisenden Adressreferenzen gesucht und die neue Positionierung der referenzierten gleichen Programmteile berechnet wird,
- eine Korrektur der Adressreferenzen entsprechend der neuen Positionierung vorgenommen wird,
- die Kopie der neuen Programmversion mit der neuen Programmversion (2) verglichen wird.

7. Verfahren nach Anspruch 6, **dadurch gekennzeichnet, dass** bei der Validierung missinterpretierte Daten der gleichen Programmteile identifiziert werden, deren binäre Form jeweils mit der binären Form eines Befehlswortes oder einer Folge von Befehlsworten aus der alten Programmversion (1) übereinstimmt.

8. Verfahren nach Anspruch 7, **dadurch gekennzeichnet, dass**, die zu den missinterpretierten Daten gehörenden Befehlsworte aus den gleichen Programmteilen entfernt und als neue Programmteile (8) gespeichert werden.

9. Verfahren nach Anspruch 7, **dadurch gekennzeichnet, dass** Adressdaten, welche die Positionierung der missinterpretierten Daten innerhalb des binären Programmcodes der alten (1) und der neuen (2) Programmversion bestimmen, als dritter Teil der Differenzdaten (3) gespeichert werden.

10. Verfahren zur Aktualisierung einer alten Programmversion (1) eines Rechnerprogramms mit Hilfe von Differenzdaten (3) zwischen dem binären Programmcode der alten Programmversion (1) und dem binären Programmcode einer neuen Programmversion (2) des Rechnerprogramms, wobei
- der binäre Programmcode aus Befehlsworten besteht,
- die Differenzdaten (3) mindestens Kopier-Adressdaten (10), neue Programmteile (8) und Einfügungs-Adressdaten (9) enthalten,
- die Kopier-Adressdaten (10) die Positionierung gleicher Programmteile innerhalb der alten (1) und innerhalb der neuen (2) Programmversion bestimmen,
- ein gleicher Programmteil zusammengesetzt ist aus im binären Programmcode der alten (1) und der neuen (2) Programmversion gleich gebliebene Abfolge von absolut gleichen Befehlsworten und von Befehlsworten, die Adressreferenzen enthalten, sowie aus Befehlsworten, die Adressreferenzen enthalten, welche auf andere, absolut gleiche Befehlsworte verweisen,
- neue Programmteile (8) alle nicht gleichen und damit übrig gebliebenen, im Programmcode der neuen Programmversion (2) enthaltenen Programmteile sind, deren Positionierung innerhalb des binären Programmcodes der neuen Programmversion (2) durch die Einfügungs-Adressdaten (9) bestimmt ist,
mit den Schritten
- Kopieren der gleichen Programmteile aus der alten Programmversion (1) und Positionierung der gleichen Programmteile in der neuen Programmversion (2) mit Hilfe der Kopier-Adressdaten (10),
- Einfügen der neuen Programmteile (8) in die neue Programmversion (2) mit Hilfe der Einfügungs-Adressdaten (9),
- Bestimmung der neuen Adressreferenzen in den gleichen Programmteilen mit Hilfe von zu den Differenzdaten gehörenden Korrekturdaten und Korrektur dieser Adressreferenzen.

11. Verfahren nach Anspruch 10, **dadurch gekennzeichnet, dass** die Adressreferenzen ermittelt werden, die auf gleiche Programmteile verweisen, und dass diese Adressreferenzen entsprechend der neuen Positionierung dieser gleichen Programmteile korrigiert werden.

12. Verfahren nach Anspruch 11, **dadurch gekennzeichnet, dass** die neue Positionierung der referenzierten gleichen Programmteile als relative Verschiebung zwischen der Positionierung in der alten (1) und der Positionierung in der neuen (2) Programmversion berechnet wird.

13. Verfahren nach Anspruch 11, **dadurch gekennzeichnet, dass** die neue Positionierung der referenzierten gleichen Programmteile als absolute Positionierung in der neuen Programmversion (2) berechnet wird.

14. Datenverarbeitungsgerät (11) zur Erzeugung und Weiterleitung von Differenzdaten (3) mit:
- einer Recheneinheit (12), die das Verfahren nach einem der Ansprüche 1 bis 9 durchführt,
- einem mit der Recheneinheit (12) verbundenen Arbeitsspeicher (13) zur Zwischenspeicherung von Daten,
- einem mit der Recheneinheit (12) verbundenen nichtflüchtigen Datenspeicher (14) zur Speicherung der alten (1) und der neuen (2) Programmversion sowie der Differenzdaten (3),
- einer mit der Recheneinheit (12) verbundenen Kommunikationsschnittstelle (15) zum Aufbau einer Datenverbindung zu mindestens einem weiteren, empfangsbereiten Datenverarbeitungsgerät (22) zur Datenübertragung der Differenzdaten (3) an das mindestens eine weitere Datenverarbeitungsgerät (22).

15. Datenverarbeitungsgerät (11) nach Anspruch 14, **dadurch gekennzeichnet, dass** die Recheneinheit (12) mit einer Eingabeeinheit (16) zur Eingabe der minimalen Größe eines gleichen Programmteils als Anzahl von mindestens zu einem gleichen Programmteil gehörenden Maschinenbefehlen verbunden ist und die Recheneinheit (12) die minimale Größe eines gleichen Programmteils dahingehend berücksichtigt, dass er gleiche Programmteile mit einer kleineren als der minimalen Größe den angrenzenden neuen Programmteilen (8) zuordnet.

16. Datenverarbeitungsgerät (17) zum Empfang und zur Verarbeitung von Differenzdaten (3) mit
- einer Recheneinheit (18), die das Verfahren nach einem der Ansprüche 10 bis 13 durchführt,
- einer mit der Recheneinheit (18) verbundenen Kommunikationsschnittstelle (19) zum Aufbau einer Datenverbindung zu einem weiteren, sendebereiten Datenverarbeitungsgerät (22) und zum Empfang der Differenzdaten (3) von dem weiteren Datenverarbeitungsgerät (22),
- einem mit der Recheneinheit (18) verbundenen nichtflüchtigen Datenspeicher (20) zur Speicherung der alten (1) und der neuen (2) Programmversion sowie der Differenzdaten (3) und
- einem mit der Recheneinheit (18) verbundenen Arbeitsspeicher (21) zur Zwischenspeicherung von Daten.

17. Datenverarbeitungsgerät (17) nach Anspruch 16, **dadurch gekennzeichnet, dass** die Recheneinheit (18) nach der Aktualisierung der alten Programmversion (1) die Gültigkeit der neuen Programmversion (2) anhand einer Prüfsumme überprüft.

18. Datenverarbeitungsgerät (17) nach einem der Ansprüche 16 oder 17, **dadurch gekennzeichnet, dass** die Recheneinheit (18) nach der Aktualisierung der alten Programmversion (1) die Gültigkeit der neuen Programmversion (2) anhand einer Signatur überprüft.

19. Datenverarbeitungsgerät (17) nach Anspruch 17 oder 18, **dadurch gekennzeichnet, dass** die Recheneinheit (18) bei Ungültigkeit der neuen Programmversion (2) die, neue. Programmversion (2) durch die alte Programmversion (1) ersetzt und eine Fehlermeldung generiert.

20. Datenverarbeitungsgerät (17) nach Anspruch 17 oder 18, **dadurch gekennzeichnet, dass** die Recheneinheit (18) bei Gültigkeit der neuen Programmversion (2) die neue Programmversion (2) automatisch zur Ausführung bringt.

21. Datenverarbeitungsgerät (17) nach einem der Ansprüche 16 bis 20, **dadurch gekennzeichnet, dass** die Recheneinheit (18) mit der Aktualisierung der alten Programmversion (1) direkt nach dem Empfang der Differenzdaten (3) beginnt.

22. Datenverarbeitungsgerät (17) nach einem der Ansprüche 16 bis 21, **dadurch gekennzeichnet, dass** die Kommunikationsschnittstelle (19) eine GSM-Schnittstelle ist.

23. Datenverarbeitungsgerät (11, 17) nach einem der vorhergehenden Ansprüche 14 bis 22, **dadurch gekennzeichnet, dass** die Recheneinheit (12, 18) die Differenzdaten (3) vor dem Versenden bzw. nach dem Empfangen mit einem Standardkomprimierungsverfahren komprimiert bzw. dekomprimiert.

## Claims

1. Method for generating difference data (3) between an old program version (1) of a computer program which is to be updated and a new program version (2) of the computer program, where
- the new program version (2) can be created from the difference data (3) and the old program version (1),
- the binary program code of the new program version (1) and that of the old program version (2) are compared with one another, said program code comprising instruction words, and
- identical program parts which are present both in the old program version (1) and in the new program version (2) and comprise at least one instruction word are determined and copy address data (10) which determine the positioning of the identical program parts within the old program version (1) and within the new program version (2) are stored as a first part (6) of the difference data (3),
**characterized by** the following steps:
- an identical program part is determined as a composition comprising a sequence of absolutely identical instruction words which has remained the same in the binary program code of the old program version (1) and that of the new program version (2) and of instruction words which contain address references and also comprising instruction words which contain address references which refer to other, absolutely identical instruction words,
- the non-identical and hence remaining program parts contained in the program code of the new program version (2) are classified as new program parts (8),
- the new program parts (8) and insertion address data (9) which determine the positioning of the new program parts (8) within the program code of the new program version (2), and also correction data for correcting the address references, are stored, with the new program parts (8) forming the insertion address data (9), and the correction data forming a second part (7) of the difference data (3).

2. Method according to claim 1, **characterized in that** the identical program parts are determined iteratively by
- first of all recognizing only absolutely identical instruction words as identical program parts,
- subsequently searching the identical and new program parts (8) for instruction words with address references,
- if the address references referred to are identical program parts then classifying the associated instruction words as identical program parts,
- whereupon the search for address references which refer to identical program parts begins again.

3. Method according to claim 2, **characterized in that** first of all identical program parts in the form of cohesive successions of absolutely identical instruction words are sought, a succession having a minimum number of absolutely identical instruction words.

4. Method according to one of the preceding claims 2 and 3, **characterized in that** new program parts are searched for relatively identical machine instructions for which the operator (4) is present in both program versions and the operand (5) indicates an address reference which refers to an identical program part.

5. Method according to one of the preceding claims 2 and 3, **characterized in that** identical program parts are searched for indirect access instructions whose operand refers to an address reference within a new program part and the address reference again refers to an identical program part, whereupon the instruction word associated with the address reference is likewise classified as an identical program part.

6. Method according to one of the preceding claims, **characterized in that** when the generation of the difference data (3) has concluded, the difference data (3) are validated by
- creating a copy of the new program version, with the identical program parts from the old program version (1) being copied to the position of the copy address data (10), and the new program parts (8) being inserted at the position of the insertion address data (9),
- searching for all the address references which refer to identical program parts and calculating the new positioning for the referenced identical program parts,
- correcting the address references in accordance with the new positioning,
- comparing the copy of the new program version with the new program version (2).

7. Method according to claim 6, **characterized in that** the validation involves identifying misinterpreted data from the identical program parts whose binary form respectively matches the binary form of an instruction word or a succession of instruction words from the old program version (1).

8. Method according to claim 7, **characterized in that** the instruction words associated with the misinterpreted data are removed from the identical program parts and are stored as new program parts (8).

9. Method according to claim 7, **characterized in that** address data which determine the positioning of the misinterpreted data within the binary program code of the old program version (1) and that of the new program version (2) are stored as a third part of the difference data (3).

10. Method for updating an old program version (1) of a computer program using difference data (3) between the binary program code of the old program version (1) and the binary program code of a new program version (2) of the computer program, where
- the binary program code comprises instruction words,
- the difference data (3) contain at least copy address data (10), new program parts (8) and insertion address data (9),
- the copy address data (10) determine the positioning of identical program parts within the old program version (1) and within the new program version (2),
- an identical program part is compiled from a sequence of absolutely identical instruction words which has remained the same in the binary program code of the old program version (1) and that of the new program version (2) and of instruction words which contain address references, and also from instruction words which contain address references which refer to other, absolutely identical instruction words,
- new program parts (8) are all the non-identical and hence remaining program parts which the program code of the new program version (2) contains and whose positioning within the binary program code of the new program version (2) is determined by the insertion address data (9),
having the following steps:
- the identical program parts are copied from the old program version (1) and the identical program parts are positioned in the new program version (2) using the copy address data (10),
- the new program parts (8) are inserted into the new program version (2) using the insertion address data (9),
- the new address references in the identical program parts are determined using correction data associated with the difference data, and these address references are corrected.

11. Method according to claim 10, **characterized in that** the address references are obtained which refer to identical program parts, and **in that** these address references are corrected in accordance with the new positioning of these identical program parts.

12. Method according to claim 11, **characterized in that** the new positioning of the referenced identical program parts is calculated as a relative movement between the positioning in the old program version (1) and the positioning in the new program version (2).

13. Method according to claim 11, **characterized in that** the new positioning of the referenced identical program parts is calculated as absolute positioning in the new program version (2).

14. Data processing appliance (11) for generating and forwarding difference data (3), having:
- a computation unit (12) which carries out the method according to one of claims 1 to 9,
- a main memory (13) connected to the computation unit (12) for buffer-storing data,
- a non-volatile data store (14) connected to the computation unit (12) for storing the old program version (1) and the new program version (2) and also the difference data (3),
- a communication interface (15) connected to the computation unit (12) for setting up a data link to at least one further, ready-to-receive data processing appliance (22) for data transmission of the difference data (3) to the at least one further data processing appliance (22).

15. Data processing appliance (11) as claimed in claim 14, **characterized in that** the computation unit (12) is connected to an input unit (16) for inputting the minimum size of an identical program part as a number of machine instructions associated with at least one identical program part, and the computation unit (12) takes account of the minimum size of an identical program part such that it associates identical program parts having a smaller size than a minimum size with the adjoining new program parts (8) .

16. Data processing appliance (17) for receiving and processing difference data (3), having
- a computation unit (18) which carries out the method according to one of claims 7 to 13,
- a communication interface (19) connected to the computation unit (18) for setting up a data link to a further, ready-to-send data processing appliance (22) and for receiving the difference data (3) from the further data processing appliance (22),
- a non-volatile data store (20) connected to the computation unit (18) for storing the old program version (1) and the new program version (2) and also the difference data (3), and
- a main memory (21) connected to the computation unit (18) for buffer-storing data.

17. Data processing appliance (17) according to claim 16, **characterized in that** when the old program version (1) has been updated the computation unit (18) uses a checksum to check the validity of the new program version (2).

18. Data processing appliance (17) according to one of claims 16 and 17, **characterized in that** when the old program version (1) has been updated the computation unit (18) uses a signature to check the validity of the new program version (2).

19. Data processing appliance (17) as claimed in claim 17 or 18, **characterized in that** if the new program version (2) is invalid then the computation unit (18) replaces the new program version (2) with the old program version (1) and generates an error message.

20. Data processing appliance (17) as claimed in claim 17 or 18, **characterized in that** if the new program version (2) is valid than the computation unit (18) automatically executes the new program version (2).

21. Data processing appliance (17) as claimed in one of claims 17 to 20, **characterized in that** the computation unit (18) starts to update the old program version (1) directly after receipt of the difference data (3).

22. Data processing appliance (17) according to one of claims 16 to 21, **characterized in that** the communication interface (19) is a GSM interface.

23. Data processing appliance (11, 17) according to one of the preceding claims 14 to 22, **characterized in that** the computation unit (12, 18) compresses and decompresses the difference data (3) using a standard compression method before sending and after receiving, respectively.

## Revendications

1. Procédé permettant de générer des données de différence (3) entre une ancienne version (1) à actualiser d'un programme d'ordinateur et une nouvelle version (2) du programme d'ordinateur, où
- la nouvelle version (2) du programme peut être établie à partir des données de différence (3) et de l'ancienne version (1) du programme,
- les codes binaires du programme, qui se composent de mots instructions, de la nouvelle version (1) et de l'ancienne version (2) du programme sont comparés l'un à l'autre et
- on détermine les parties de programme identiques, qui existent aussi bien dans l'ancienne version (1) que dans la nouvelle version (2) du programme et qui comprennent au moins un mot instruction, ainsi que les données d'adressage de copie (10), qui déterminent le positionnement des parties de programme identiques à l'intérieur de l'ancienne version (1) et à l'intérieur de la nouvelle version (2) du programme, et on les mémorise comme première partie (6) des données de différence (3),
**caractérisé par** les étapes suivantes:
- détermination d'une partie de programme identique composée d'une séquence, restée la même dans le code binaire du programme de l'ancienne version (1) et de la nouvelle version (2) du programme, de mots instructions absolument identiques et de mots instructions qui renferment des références d'adressage, ainsi que de mots instructions, qui renferment des références d'adressage renvoyant à d'autres mots instructions absolument identiques,
- classification comme nouvelles parties de programme (8) des parties de programme non identiques qui sont contenues dans le code de programme de la nouvelle version (2) du programme et qui forment ainsi un reste,
- mémorisation des nouvelles parties de programme (8) et de données d'adressage d'insertion (9), qui déterminent le positionnement des nouvelles parties de programme (8) à l'intérieur du code de programme de la nouvelle version (2) du programme, ainsi que de données de correction destinées à la correction des références d'adressage, les nouvelles parties de programme (8), les données d'adressage d'insertion (9) et les données de correction formant une deuxième partie (7) des données de différence (3).

2. Procédé selon la revendication 1, **caractérisé par le fait que** la détermination des parties de programme identiques est faite d'une façon itérative, en ce que
- d'abord, seuls les mots instructions absolument identiques sont reconnus comme parties de programme identiques,
- ensuite, les parties de programme identiques et les nouvelles parties de programme (8) sont analysées pour trouver des mots instructions avec des références d'adressage,
- dans la mesure où les références d'adressage renvoient à des parties de programme identiques, les mots instructions correspondants sont classés comme parties de programme identiques,
- à la suite de quoi, on recommence la recherche de références d'adressage qui renvoient à des parties de programme identiques.

3. Procédé selon la revendication 2, **caractérisé par le fait que,** d'abord, des parties de programme identiques sont recherchées en tant que séquences cohérentes de mots instructions absolument identiques, une séquence comportant un nombre minimum de mots instructions absolument identiques.

4. Procédé selon l'une des revendications précédentes 2 ou 3, **caractérisé par le fait que** des nouvelles parties de programme sont analysées pour rechercher des mots machine relativement identiques, dans lesquels l'opérateur (4) existe dans les deux versions du programme et l'opérande (5) fournit une référence d'adressage qui renvoie à une partie de programme identique.

5. Procédé selon l'une des revendications précédentes 2 ou 3, **caractérisé par le fait que** des parties de programme identiques sont analysées pour rechercher des instructions indirectes d'accès, dont l'opérande renvoie à une référence d'adressage à l'intérieur d'une nouvelle partie de programme et la référence d'adressage renvoie, de son côté, à une partie identique de programme, à la suite de quoi le mot instruction faisant partie de la référence d'adressage est également classé comme partie de programme identique.

6. Procédé selon l'une des revendications précédentes, c a - ractérisé par le fait que, après la fin de la génération des données de différence (3), on procède à une validation des données de différence (3) en ce que
- on établit une copie de la nouvelle version du programme, les parties de programme identiques provenant de l'ancienne version (1) du programme étant copiées à la position des données d'adressage de copie (10) et les nouvelles parties de programme (8) étant insérées à la position des données d'adressage d'insertion (9),
- toutes les références d'adressage renvoyant à des parties de programme identiques sont recherchées et le nouveau positionnement des parties de programme identiques référencées est calculé,
- une correction des références d'adressage est effectuée en fonction du nouveau positionnement,
- la copie de la nouvelle version de programme est comparée à la nouvelle version (2) du programme.

7. Procédé selon la revendication 6, **caractérisé par le fait que** des données des parties de programme identiques, qui ont été mal interprétées lors de la validation et dont la forme binaire concorde avec la forme binaire d'un mot instruction ou d'une séquence de mots instructions provenant de l'ancienne version (1) du programme, sont identifiées.

8. Procédé selon la revendication 7, **caractérisé par le fait que** les mots instructions faisant partie des données mal interprétées sont supprimés des parties de programme identiques et mémorisés en tant que nouvelles parties du programme (8).

9. Procédé selon la revendication 7, **caractérisé par le fait que** des données d'adressage, qui déterminent le positionnement des données mal interprétées à l'intérieur du code binaire du programme de l'ancienne version (1) et de la nouvelle version (2) du programme, sont mémorisées comme troisième partie des données de différence (3).

10. Procédé permettant d'actualiser une ancienne version (1) d'un programme d'ordinateur à l'aide de données de différence (3) entre le code binaire du programme de l'ancienne version (1) du programme et le code binaire du programme d'une nouvelle version (2) du programme d'ordinateur, où
- le code binaire du programme se compose de mots instructions,
- les données de différence (3) renferment au moins des données d'adressage de copie (10), des nouvelles parties de programme (8) et des données d'adressage d'insertion (9),
- les données d'adressage de copie (10) déterminent le positionnement de parties de programme identiques à l'intérieur de l'ancienne version (1) et à l'intérieur de la nouvelle version (2) du programme,
- une partie de programme identique se compose d'une séquence, qui est restée la même dans le code binaire du programme de l'ancienne version (1) et de la nouvelle version (2) du programme, de mots instructions absolument identiques et de mots instructions, qui renferment des références d'adressage, ainsi que de mots instructions, qui renferment des références d'adressage renvoyant à d'autres mots instructions absolument identiques,
- les nouvelles parties de programme (8) sont toutes les parties de programme contenues dans le code de programme de la nouvelle version (2) du programme, qui ne sont pas identiques et qui forment, ainsi, un reste et dont le positionnement à l'intérieur du code binaire du programme de la nouvelle version (2) du programme est déterminé par les données d'adressage d'insertion (9), le dit procédé comprenant les étapes suivantes:
- copie des parties de programme identiques provenant de l'ancienne version (1) du programme et positionnement des parties de programme identiques dans la nouvelle version (2) du programme à l'aide des données d'adressage de copie (10),
- insertion des nouvelles parties de programme (8) dans la nouvelle version (2) du programme à l'aide des données d'adressage d'insertion (9),
- détermination des nouvelles références d'adressage dans les parties de programme identiques à l'aide de données de correction faisant partie des données de différence et correction de ces références d'adressage.

11. Procédé selon la revendication 10, **caractérisé par le fait qu'**on détermine les références d'adressage qui renvoient à des parties de programme identiques et que ces références d'adressage sont corrigées en fonction du nouveau positionnement de ces parties de programme identiques.

12. Procédé selon la revendication 11, **caractérisé par le fait que** le nouveau positionnement des parties de programme identiques référencées est calculé comme translation relative entre le positionnement dans l'ancienne version (1) du programme et le positionnement dans la nouvelle version (2) du programme.

13. Procédé selon la revendication 11, **caractérisé par le fait que** le nouveau positionnement des parties de programme identiques référencées est calculé comme positionnement absolu dans la nouvelle version (2) du programme.

14. Appareil de traitement de données (11) permettant de générer et de transmettre des données de différence (3), comportant:
- une unité de calcul (12) exécutant le procédé selon l'une des revendications 1 à 9,
- une mémoire vive (13) reliée à l'unité de calcul (12) et permettant de mémoriser les données en tampon,
- une mémoire de données (14) non volatile reliée à l'unité de calcul (12) et permettant de mémoriser l'ancienne version (1) et la nouvelle version (2) du programme, ainsi que les données de différence (3),
- une interface de communication (15) reliée à l'unité de calcul (12) permettant d'établir une liaison de transmission de données vers au moins un autre appareil de traitement de données (22) prêt à la réception et destinée à transmettre les données de différence (3) à le au moins un autre appareil de traitement de données (22).

15. Appareil de traitement de données (11) selon la revendication 14, **caractérisé par le fait que** l'unité de calcul (12) est reliée à une unité de saisie (16) permettant de saisir la dimension minimum d'une partie de programme identique en tant que nombre d'instructions machine faisant partie de au moins une partie de programme identique et que l'unité de calcul (12) tient compte de la dimension minimum d'une partie de programme identique en ce sens qu'il affecte des parties de programme identiques ayant une dimension inférieure à la dimension minimum aux nouvelles parties de programme (8) voisines.

16. Appareil de traitement de données (17) destiné à recevoir et à traiter des données de différence (3), comportant:
- une unité de calcul (18) exécutant le procédé selon l'une des revendications 10 à 13,
- une interface de communication (19) reliée à l'unité de calcul (18) et permettant d'établir une liaison de transmission de données vers un autre appareil de traitement de données (22) prêt à l'émission et destinée à recevoir les données de différence (3) provenant de l'autre appareil de traitement de données (22),
- une mémoire de données (20) non volatile reliée à l'unité de calcul (18) et permettant de mémoriser l'ancienne version (1) et la nouvelle version (2) du programme, ainsi que les données de différence (3) et
- une mémoire vive (21) reliée à l'unité de calcul (18) et permettant de mémoriser des données en tampon.

17. Appareil de traitement de données (17) selon la revendication 16, **caractérisé par le fait que** l'unité de calcul (18) vérifie, après l'actualisation de l'ancienne version (1) du programme et à l'aide d'un total de contrôle, la validité de la nouvelle version (2) du programme.

18. Appareil de traitement de données (17) selon l'une des revendications 16 ou 17, **caractérisé par le fait que** l'unité de calcul (18) vérifie, après l'actualisation de l'ancienne version (1) du programme et à l'aide d'une signature, la validité de la nouvelle version (2) du programme.

19. Appareil de traitement de données (17) selon l'une des revendications 17 ou 18, **caractérisé par le fait que**, dans le cas où la nouvelle version (2) du programme n'est pas valide, l'unité de calcul (18) remplace la nouvelle version (2) du programme par l'ancienne version (1) du programme et génère un message d'erreur.

20. Appareil de traitement de données (17) selon les revendications 17 ou 18, **caractérisé par le fait que,** dans le cas où la nouvelle version (2) du programme est valide, l'unité de calcul (18) met automatiquement la nouvelle version (2) du programme à exécution.

21. Appareil de traitement de données (17) selon l'une des revendications 16 à 20, **caractérisé par le fait que** l'unité de calcul (18) commence l'actualisation de l'ancienne version (1) du programme directement après la réception des données de différence (3).

22. Appareil de traitement de données (17) selon l'une des revendications 16 à 21, **caractérisé par le fait que** l'interface de communication (19) est une interface GSM.

23. Appareil de traitement de données (11, 17) selon l'une des revendications précédentes 14 à 22, **caractérisé** p a r le fait que l'unité de calcul (12, 18) comprime, à l'aide d'une méthode standard de compression, les données de différence avant de les envoyer et les décomprime après leur réception.
